**Europäisches Patentamt**

**European Patent Office**

**Office européen des brevets**

(19)

(11) Veröffentlichungsnummer: **0 054 286**

**A1**

(12) # EUROPÄISCHE PATENTANMELDUNG

(21) Anmeldenummer: **81110405.8**

(22) Anmeldetag: **14.12.81**

(51) Int. Cl.³: **F 16 L 23/00**
**B 22 D 25/00, B 29 F 1/00**

(30) Priorität: **12.12.80 DE 3046826**

(43) Veröffentlichungstag der Anmeldung:
**23.06.82 Patentblatt 82/25**

(84) Benannte Vertragsstaaten:
**BE CH LI NL**

(71) Anmelder: **Atomac Dieter Brütsch KG**
**Konkursverwalter Hinkers, Josef.**
**Bahnhofstrasse 44-46**
**D-4422 Ahaus(DE)**

(72) Erfinder: **Buss, Werner**
**Tückingstrasse 24**
**D-4422 Ahaus(DE)**

(54) **Verfahren zur Herstellung eines Gussformteiles mit Losflansch.**

(57) Die Erfindung bezieht sich auf ein Gußformteil, bei welchem der oder die "Losflansche" während des Herstellungsverfahrens mit angegossen und durch Verbindungsstege gehalten sind, wobei die Verbindungsstege anschließend abgenommen werden, können, so daß der Losflansch sich dann freibeweglich hinter dem Bund des Gußteiles befindet.

EP 0 054 286 A1

./...

Fig.1

**"Verfahren zur Herstellung eines Gußformteiles mit Losflansch"**

Die Erfindung bezieht sich auf ein Verfahren zur Herstellung eines Gußformteiles mit wenigstens einem angeformten Bund, der der Verbindung des Gußteiles mit einem anderen Bauteil dient sowie wenigstens einem den Bund hintergreifenden, auf dem Bauteil verschieblichen Flansch.

Bei Rohrverbindungsstücken, die an beiden Enden mit einem Bund ausgerüstet sind, war es erforderlich, entweder den zur Verbindung dieses Rohrstückes mit den angrenzenden Bauteilen erforderlichen Flansch fest am Bund auszuformen, d.h. beim Guß des Rohrstükkes mit herzustellen oder den Flansch zweiteilig auszubilden, damit er in geteilter Form über den Bund gesetzt werden konnte und dann hinter dem Bund zusammengesetzt wurde, so daß dadurch der Flansch dann den Bund hintergreifen und damit das Bauteil festlegen konnte.

Diese Art der Flanschherstellung ist aufwendig und benötigt zusätzliche Verbindungsmittel.

Der Erfindung liegt die Aufgabe zugrunde, einen zur Festlegung eines Bundes dienenden Flansch in einfacherer Weise herzustellen und möglichst zusätzliche Hilfsmittel zur Festlegung des Flansches oder zur

Ausbildung des Flansches zu vermeiden.

Diese der Erfindung zugrundeliegende Aufgabe wird dadurch gelöst, daß der Flansch während des Gusses des Gußformteiles zusammen mit dem Gußformteil - mit diesem über Stege verbunden - gegossen wird, worauf anschliessend die Stege entfernt werden.

Vorzugsweise wird dabei so vorgegangen, daß der Flansch zusammen mit dem Gußformteil ein Bauteil bildet.

Es ist ersichtlich, daß durch eine solche Maßnahme der Flansch nunmehr während des Herstellungsverfahrens einstückig mit dem Gußbauteil hergestellt werden kann.

Die Verbindung des Flansches mit dem Gußbauteil erfolgt dabei über Verbindungsstege, beispielsweise drei Verbindungsstege, die, wenn das Bauteil ausgeformt ist, abgeschlagen werden können, so daß dann der Flansch hinter dem Bund angeordnet ist, ohne daß es notwendig ist, den Flansch zweiteilig auszubilden.

Vorteilhafte Ausgestaltungen der erfindungsgemäßen Anordnung sind in den Unteransprüchen erläutert.

Ein Ausführungsbeispiel der Erfindung wird anhand der Zeichnungen beschrieben. Die Zeichnungen zeigen dabei in

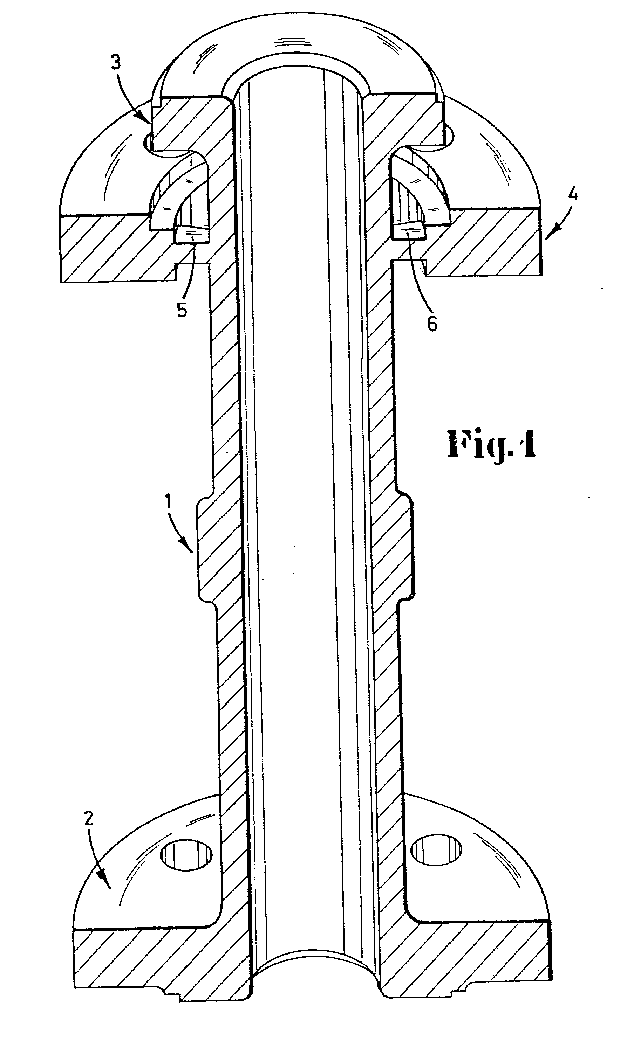

Fig. 1    eine Darstellung eines Rohrkörpers gemäß der Erfindung, wie er unmittelbar aus der Gießerei kommt und in

Fig. 2    den Rohrkörper gemäß Fig. 1 mit freigegebenem Losflansch.

In den Zeichnungen ist mit 1 ein Rohrkörper bezeichnet, der einenendes in an sich bekannter Weise mit einem Festflansch 2 ausgerüstet ist. Anderenendes weist dieser Rohrkörper einen beispielsweise zur Dichtung erforderlichen Bund 3 auf, der über einen Losflansch 4 an einem in der Zeichnung nicht dargestellten Bauteil festgelegt werden soll.

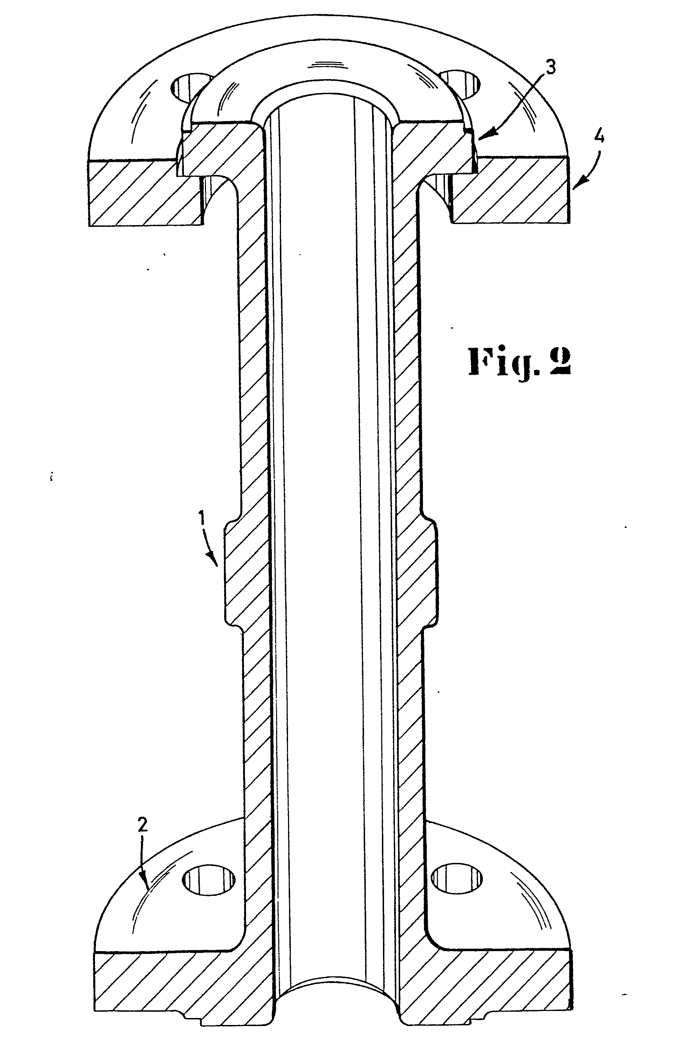

Während des Gusses des Rohrkörpers 1 wird der Flansch 4 mitgegossen, wobei Verbindungsstege 5, 6 zwischen dem Rohrkörper 1 und dem Flansch 4 stehenbleiben, die einmal zur Zuführung des Gußwerkstoffes beim Gießen dienen, zum andern der Halterung des Flansches 4 am Rohrkörper 1 dienen. Wenn der eigentliche Rohrkörper 1 nunmehr nach dem Guß bearbeitet wird, ist es möglich, die mit 5 und 6 bezeichneten Stege zu entfernen, beispielsweise abzuschleifen, so daß dann der eigentliche Flansch 4 lose auf dem Rohrkörper 1 liegt und in entsprechende Anlage, so wie dies in Fig. 2 dargestellt ist, mit dem Bund 3 gebracht werden kann.

Aus der Erläuterung und der Zeichnung ist erkennbar, daß durch das erfindungsgemäße Verfahren in einfachster Weise die Herstellung eines sogenannten Losflansches möglich ist, ohne daß dieser Flansch kompliziert ausgebildet sein muß.

Patentansprüche:

1. Verfahren zur Herstellung eines Gußformteiles mit wenigstens einem angeformten Bund, der der Verbindung des Gußteiles mit einem anderen Bauteil dient sowie wenigstens einem den Bund hintergreifenden, auf dem Bauteil verschieblichen Flansch, dadurch gekennzeichnet, daß der Flansch (4) während des Gusses des Gußformteiles mittels Verbindungsstegen zusammen mit dem Gußformteil (1) gegossen wird und anschließend die Stege entfernt werden.

2. Gußformteil mit wenigstens einem angeformten Bund, der der Verbindung des Gußteiles mit einem anderen Bauteil dient sowie wenigstens einem den Bund hintergreifenden, auf dem Bauteil verschieblichen Flansch, dadurch gekennzeichnet, daß der Flansch (4) zusammen mit dem Gußformteil (1) hergestellt ist.

3. Gußformteil nach Anspruch 2, dadurch gekennzeichnet, daß der Flansch (4) mit dem Gußformteil (1) über Verbindungsstege (5, 6) verbunden ist.

4. Gußformteil nach Anspruch 2 und 3, dadurch gekennzeichnet, daß die Verbindungsstege (5, 6) wesentlich kleinere Abmessungen als die Stärken des Flansches aufweisen.

5. Gußformteil nach Anspruch 2 bis 4, dadurch gekennzeichnet, daß drei Verbindungsstege (5, 6) vorgesehen sind.

6. Gußformteil nach einem oder mehreren der vorhergehenden Ansprüche, d a d u r c h   g e -
k e n n z e i c h n e t ,   daß mehrere Flansche während des Gusses des Gußformteiles einstückig mit dem Gußformteil hergestellt sind.

0054286

Fig.1

Fig. 2

**Europäisches Patentamt**

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| Y | FR - A - 2 162 266 (LABARRE)<br>* Seite 4, Zeilen 6-33; Figuren 1,6,7 *<br>-- | 1-4 | F 16 L 23/00<br>B 22 D 25/00<br>B 29 F 1/00 |
| Y | FR - A - 1 486 842 (AIME)<br>* Seite 1, Zeilen 1-9; Figuren 1-4 *<br>-- | 1-4 | |
| A | FR - A - 2 107 514 (ROLLMAPLAST) | 1 | RECHERCHIERTE SACHGEBIETE (Int Cl.³) |
| A | DE - C - 1 002 578 (HOESCH)<br>---- | 1 | F 16 L<br>B 22 D<br>B 29 F |

KATEGORIE DER GENANNTEN DOKUMENTE

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsatze
E älteres Patentdokument, das jedoch erst am oder nach dem Anmeldedatum veröffentlicht worden ist
D in der Anmeldung angeführtes Dokument
L aus andern Grunden angefuhrtes Dokument

& Mitglied der gleichen Patentfamilie, ubereinstimmendes Dokument

X Der vorliegende Recherchenbericht wurde fur alle Patentanspruche erstellt

| Recherchenort | Abschlußdatum der Recherche | Pruter |
|---|---|---|
| Den Haag | 18-03-1982 | ANGIUS |

EPA form 1503.1   06.78